Europäisches Patentamt

European Patent Office

Office européen des brevets

(19)

(11) **EP 0 700 544 B1**

(12) **EUROPÄISCHE PATENTSCHRIFT**

(45) Veröffentlichungstag und Bekanntmachung des Hinweises auf die Patenterteilung:
**26.02.1997 Patentblatt 1997/09**

(21) Anmeldenummer: **94918816.3**

(22) Anmeldetag: **27.05.1994**

(51) Int Cl.⁶: **G06T 5/20**, G06K 9/46

(86) Internationale Anmeldenummer:
**PCT/EP94/01752**

(87) Internationale Veröffentlichungsnummer:
**WO 94/28500 (08.12.1994 Gazette 1994/27)**

(54) **VERFAHREN UND EINRICHTUNG ZUR RAUMFILTERUNG**

SPATIAL FILTERING PROCESS AND SYSTEM

PROCEDE ET SYSTEME DE FILTRAGE SPATIAL

(84) Benannte Vertragsstaaten:
**AT BE CH DE DK ES FR GB GR IE IT LI LU MC NL PT SE**

(30) Priorität: **27.05.1993 DE 4317746**

(43) Veröffentlichungstag der Anmeldung:
**13.03.1996 Patentblatt 1996/11**

(73) Patentinhaber: **Max-Planck-Gesellschaft zur Förderung der Wissenschaften e.V. Berlin 80539 München (DE)**

(72) Erfinder:
- **MORFILL, Gregor, Eugen
  D-81927 München (DE)**
- **SCHEINGRABER, Herbert
  D-80803 München (DE)**
- **WIEDENMANN, Gerda
  D-80639 München (DE)**

(74) Vertreter: **Heusler, Wolfgang, Dipl.-Ing.
Dr. Dieter von Bezold
Dipl.-Ing. Peter Schütz
Dipl.-Ing. Wolfgang Heusler
Brienner Strasse 52
80333 München (DE)**

(56) Entgegenhaltungen:
**EP-A- 0 525 592**

- **PHYSICAL REVIEW A (GENERAL PHYSICS), Bd.40, Nr.7, 1. Oktober 1989, USA Seiten 3954 - 3963 ATMANSPACHER H ET AL. 'Determination of F( alpha) for a Limited Random Point Set (Galaxy Distribution).'**
- **SIMULATION, Bd.60, Nr.4, April 1993, USA Seiten 261 - 278 HANDLEY J W ET AL. 'Chaos and Fractal Algorithms Applied to Signal Processing and Analysis'**
- **PHYSICAL REVIEW E (STATISTICAL PHYSICS,PLASMAS,FLUIDS AND RELATED INTERDISCIPLINARY TOPICS), Bd.47, Nr.1, Januar 1993, USA Seiten 704 - 710 EBELING H & WIEDERNMANN G 'Detecting Structure in Two Dimensions Combining Voronoi Tessellation and Percolation.'**

**Beschreibung**

Die vorliegende Erfindung betrifft ein Verfahren und eine Einrichtung zur Raumfilterung, die es ermöglichen, Strukturen in n-dimensionalen Räumen zu erkennen, auch wenn diese Strukturen stark durch Störungen überlagert sind.

Es ist bekannt, für diesen Zweck lokale Suchverfahren für Dichteschwankungen, die sogenannte "Maximum-Entropie-Methode" sowie die sogenannte "Maximum-Likelihood-Methode" zu verwenden. Diese bekannten Verfahren erfordern jedoch Annahmen oder Vorabinformationen um Strukturen identifizieren zu können. Weitere Nachteile der bekannten Verfahren sind, daß eine Erweiterung auf mehr als zwei Dimensionen sehr rechenaufwendig ist, daß uneinheitliche Meßgrößen und viele unterschiedliche Korrelationen nicht verarbeitet werden können und daß die Empfindlichkeit bei irregulären Mustern mit starken unkorrelierten Störungen gering ist.

Ferner ist aus der Publikation von H. Atmanspacher et al. in PHYSICAL REVIEW A (GENERAL PHYSICS), Bd. 40, Nr. 7, Oktober 1989, USA, Seiten 3954-3963; ATMANSPACHER H. ET AL. "Determination af F(alpha) for a Limited Random Point Set (Galaxy Distribution)" ein Verfahren bekannt, bei dem durch Bestimmung des $f(\alpha)$-Spektrums in einer überwiegend unkorrelierten Punktmenge eventuell vorhandene korrelierte Untermengen identifiziert werden können. Ein weiteres Verfahren ist aus der Publikation von H. Ebeling et al. in PHYSICAL REVIEW E (STATISTICAL PHYSICS, PLASMAS, FLUIDS AND RELATED INTERDISCIPLINARY TOPICS), Bd. 47, Nr. 1, Januar 1993, USA, Seiten 704-710; EBELING H. & WIEDENMANN G. "Detecting Structure in Two Dimensions Combining Voronoi Tessellation and Percolation" bekannt. Bei diesem Verfahren wird eine Aufteilung des ursprünglichen Datenpunktfeldes in einzelne Zellen vorgenommen (Voronoi Tesselation) und die Verteilung der Zellen mit derjenigen verglichen, die bei einer statistischen Poisson-Verteilung erwartet werden würde.

Der vorliegenden Erfindung liegt ausgehend von diesem Stand der Technik die Aufgabe zugrunde, ein Verfahren und eine Einrichtung anzugeben, mit denen auf verhältnismäßig einfache Weise n-dimensionale Strukturen identifiziert werden können, die von starken Störungen überdeckt sind.

Das erfindungsgemäße Verfahren ist in Ansprüchen 1 und 2 dargestellt, während eine Einrichtung zur Durchführung des Verfahrens in Anspruch 5 definiert ist.

Das Verfahren und die Einrichtung gemäß der Erfindung sind dem Stand der Technik erheblich überlegen und erlauben die Identifizierung von Strukturen, die durch so starke Störungen verdeckt sind, daß die bekannten Verfahren versagen. Der erforderliche zeitliche und apparative Aufwand ist gering.

Das Verfahren und die Einrichtung gemäß der Erfindung sind auf Wertetupel beliebiger Dimensionen anwendbar. Bevorzugte Anwendungsgebiete sind die automatische Bildauswertung, z.B. in der Medizin, bei Satellitenbildern und Luftaufnahmen sowie bei der Werkstoffprüfung.

Das Verfahren und die Einrichtung gemäß der Erfindung lassen sich auf beliebige Punktmengen in n-dimensionalen Koordinatenräumen (n = natürliche Zahl) anwenden. Dabei kann der Begriff "Punkt" sowohl im mathematischen Sinne verstanden werden als auch als Koordinatentupel zur Identifikation von Bildpixeln und dergleichen. Die entsprechenden Koordinatenräume können beliebige ganzzahlige Dimensionen haben, die in der Praxis mindestens gleich 2 sein werden. Die Koordinaten sind nicht auf eine einheitliche physikalische Dimension beschränkt, sondern können z.B. Ortskoordinaten sowie einen oder mehrere zusätzliche Parameter, wie einen Farbwert, einen Energiewert oder dergleichen umfassen. In einem dreidimensionalen Koordinatenraum können beispielsweise die ersten beiden Koordinaten den Ort in einer Fläche und die dritte Koordinate einen auf eine geeignete Skala transformierten Energie- oder Farbwert enthalten. Im einfachsten Falle wird man die Skalierung der Koordinaten so wählen, daß die resultierende Punktmenge in ein Einheitsquadrat oder einen Einheitswürfel abgebildet werden kann.

Bei einer sich zeitlich ändernden Meßgröße ("Zeitreihe") wird ein n-dimensionaler Koordinatenraum gewählt, wobei die Punktkoordinaten durch n aufeinanderfolgende Messungen der interessierenden Größe bestimmt sind.

Im folgenden wird die Erfindung unter Bezugnahme auf die Zeichnungen näher erläutert, dabei werden noch weitere Vorteile und Merkmale der Erfindung zur Sprache kommen.

Es zeigen:

Fig.1a    eine vereinfachte Darstellung einer in erster Näherung einem Punkt entsprechenden ("0-dimensionalen") Verteilung von schwarzen Pixeln;

Fig.1b    ein Diagramm, das schematisch die Anzahl N der schwarzen Pixel innerhalb eines als kreisförmig angenommenen Umgebungsgereiches um ein vorgegebenes, durch einen ausgezogenen Kreis bezeichnetes Pixel in Abhängigkeit vom Radius des Umgebungsbereiches darstellt;

Fig.2a und 2b    Darstellungen entsprechend Fig. 1a bzw. 1b für eine lineare (1-dimensionale) Verteilung von schwarzen Pixeln;

Fig.3a und 3b    Darstellungen entsprechend Fig. 1a bzw. 1b für eine flächige (2-dimensionale) Verteilung von schwarzen Pixeln;

| | |
|---|---|
| Fig.4a | eine zweidimensionale Punktmenge mit 900 stochastisch verteilten schwarzen Punkten auf weißem Untergrund; |
| Fig.4b | die Punktmenge gemäß Fig.4a in deren Mitte zusätzlich 100 Punkte angeordnet sind, die einer Struktur mit Gaußverteilung entspricht; |
| Fig.4c | das Spektrum von Skalierungskoeffizienten der Punktverteilung gemäß Fig.4a; |
| Fig.4d | das Spektrum der Skalierungskoeffizienten der Punktverteilung gemäß Fig.4b; |
| Fig.4e | die kumulative Verteilungsfunktion für die Punktverteilung gemäß Fig. 4a; |
| Fig.4f | die kumulative Verteilungsfunktion der Punktverteilung gemäß Fig.4b; |
| Fig.5a | eine mit dem Röntgensatelliten ROSAT gemessene Photonenkarte des Clusters A1314; |
| Fig.5b | das Spektrum der Skalierungskoeffizienten für die Punktverteilung gemäß Fig.5a; |
| Fig.5c | die kumulative Verteilungsfunktion für die Punktverteilung gemäß Fig. 5a; |
| Fig.5d | die Abweichung der kumulativen Verteilungsfunktion gemäß Fig. 5c von der einer statistischen Punktverteilung oder -menge; |
| Fig.6a | ein Spektrum der Skalierungskoeffizienten für die Punkteverteilung gemäß Fig. 5a unter Hinzunahme einer Energiekoordinate; |
| Fig.6b | eine Darstellung der Ortskoordinaten und der Energie der Punkte, die zu dem schraffierten Bereich des Spektrums der Skalierungskoeffizienten gemäß Fig. 6a nach Skalierung auf einem Einheitswürfel gehören; |
| Fig.6c | die Projektion der Verteilung im Ein- |

heitswürfel auf die X-Y-Ebene;

| | |
|---|---|
| Fig.7a | eine Punktverteilung, welche einem von Rauschen überlagerten Sinussignal entspricht; |
| Fig.7b | ein Spektrum der Skalierungskoeffizienten der von der stochastischen Störung überlagerten Sinusfunktion für einen fünfdimensionalen Koordinatenraum; |
| Fig.7c | ein Spektrum der Skalierungkoeffizienten der von der stochastischen Störung überlagerten Sinusfunktion für einen siebendimensionalen Koordinatenraum; |
| Fig.7d | eine Darstellung der rekonstruierten Struktur, die aus den Ermittlungsskalierungskoeffizienten der vorgegebenen Verteilung abzüglich der Skalierungskoeffiezienten für eine stochastische Verteilung ermittelt wurde; |
| Fig. 8 | ein Schaltbild einer Einrichtung zur Durchführung des vorliegenden Verfahrens. |

Im folgenden soll der Begriff "Punkt" sowohl im mathematischen Sinne verstanden werden als auch Koordinatentupel bedeuten, die jeweils ein Bildpixel o. dgl. definieren. Die Koordinatenräume, in die diese Punkte $Q_m$ eingebettet sind, können beliebige ganzzahlige Dimensionen, im allgemeinen $\geq 2$, annehmen. Die Koordinaten sind, wie erwähnt, nicht auf eine einheitliche physikalische Dimension, z.B. Länge, beschränkt.

Der erste Schritt des vorliegenden Verfahrens besteht darin, für jeden Punkt der zu untersuchenden Punkteverteilung oder Punktmenge (oder, was für den zweidimensionalen Fall äquivalent ist, für jedes Pixel eines Rasters oder xy-Feldes) einen sog. Skalierungskoeffizienten zu bestimmen. Der Skalierungskoeffizient wird aus der Punktdichte in der Umgebung des betrachteten Punktes, d. h. der Anzahl N der Punkte im jeweiligen Umgebungsbereich, ermittelt. Insbesondere wird unter der Annahme, daß die Punkteanzahl N in der Umgebung des betrachteten Punktes in Abhängigkeit vom Durchmesser d dieser Umgebung einer einfachen (d.h. nur ein einziges Potenzglied enthaltenden) Potenzfunktion

$$N = d^a$$

folgt, der Skalierungskoeffizient für diesen Punkt als der Exponent a der Potenzfunktion definiert.

Ob die Punktanzahl in einer beschränkten Umgebung eines betrachteten Punktes in etwa einer einfachen Potenzfunktion folgt, und der Exponent dieser Potenzfunktion, lassen sich am einfachsten aus einer doppeltlogarithmischen Darstellung der Punkteanzahl N als Funktion des Durchmessers d ermitteln:

$$\log N = a \log d.$$

Bei einer solchen Darstellung ergibt sich im Falle einer einfachen Potenzfunktion eine Gerade. Die Steigung dieser Geraden ist dann der gesuchte Skalierungskoeffizient für den betrachteten Punkt. Bei nichtkreisförmiger Umgebung, z. B. im Falle einer quadratischen Umgebung eines Pixels eines xy-Rasters, bedeutet d eine andere entsprechende Abmessungsdimension, z. B. die Seitenlänge eines die Umgebung bildenden Quadrats.

Für jeden Punkt Q der Punktmenge werden der zugehörige Skalierungskoeffizient $a_Q$ und die zugehörigen Punktkoordinaten $x_Q$, $y_Q$, $z_Q$, ... gespeichert.

Nachdem die Skalierungskoeffizienten für alle Punkte der zu untersuchenden Punktmenge ermittelt worden sind, wird die Häufigkeitsverteilung der Skalierungskoeffizienten ermittelt, d.h. die Anzahl f(a) der jeweiligen Skalierungskoeffizienten (a) in Abhängigkeit von ihrem Wert. Zusätzlich wird gespeichert, welche Punkte der untersuchten Punktmenge zu den jeweiligen Werten der Häufigkeitsverteilung der Skalierungskoeffizienten gehören.

Für eine vollkommen statistische Punktmenge im Grenzfall zum Kontinuum haben alle Punkte den gleichen Skalierungskoeffizienten. Die Häufigkeitsverteilung reduziert sich dann also auf einen einzigen Wert. Diese Häufigkeitsverteilung wird nun so normiert, daß in einem n-dimensionalen Koordinatenraum die Skalierungskoeffizienten alle den Wert n annehmen und der Wert der Häufigkeitsverteilung ebenfalls n beträgt.

Die transformierte Häufigkeitsverteilung wird als Spektrum der Skalierungskoeffizienten bezeichnet. Das Spektrum der Skalierungskoeffizienten ist eine eindeutige Abbildung der lokalen und globalen Eigenschaften der untersuchten Punktmenge.

Analog zu dem obigen Vorgehen wird ferner das Spektrum der Skalierungskoeffizienten einer der untersuchten Punktmenge entsprechenden Punktmenge (also z.B. einer unter den gleichen oder analogen Bedingungen gewonnene Punktmenge) bestimmt, die keine Dichte- oder Korrelationsgradienten aufweist. Dieses Spektrum kann entweder auf analytischem Wege gewonnen werden, wie bei dem unten angeführten Beispiel, oder durch Simulation bzw. geeignete Messung einer entsprechenden Punktmenge. Für diese stochastische Vergleichsmenge ist es nicht notwendig, die Punkte den jeweiligen Werten der Häufigkeitsverteilung zuzuordnen, es wird nur das Spektrum der Skalierungskoeffizienten als solches benötigt.

Es wird nun der Unterschied oder die Abweichung des Skalierungskoeffizienten-Spektrums der untersuchten Punktmenge vom Skalierungskoeffizienten-Spektrum der Vergleichsmenge ermittelt. Der Grad der Abweichung dieser Spektren, der den dichten bzw. stark korrelierten Gebieten entspricht, ist ein Maß für das Auftreten von Dichte bzw. Korrelationsgradienten. Die Punkte der untersuchten Menge, die diesem abweichenden Teil zugeordnet sind, identifizieren die "Struktur", die die Abweichung der Dichte bzw. Korrelationsgradienten bedingt.

Die Abweichung kann auf zwei Arten bestimmt werden: Bei der ersten Methode werden, wie oben beschrieben, die Spektren der Skalierungskoeffizienten miteinander verglichen. Um zur Häufigkeitsverteilung zu gelangen ist es in praktischen Anwendungen notwendig, die gefundenen Skalierungskoeffizienten in Wertekanäle oder Wertebereiche, sog. "Bins", einzuteilen. Durch die Breite der Wertekanäle wird der statistische Fehler für die Werte der Häufigkeitsverteilung bestimmt. Eine große Wertekanalbreite bedeutet einen kleinen statistischen Fehler, allerdings auch eine geringe Auflösung.

Bei der zweiten Methode zur Bestimmung der Abweichung von gegebener zu erwarteter Verteilung wird die Einführung eines zusätzlichen Parameters in Form der Binbreite vermieden. Statt des Spektrums der Skalierungskoeffizienten wird die kumulative oder integrale Verteilungsfunktion der Skalierungskoeffizienten bestimmt. Dazu wird jedem vorkommenden Wert der Skalierungskoeffizienten die Zahl der gemessenen Skalierungskoeffizienten zugeordnet, die größer oder gleich diesem Wert sind. Diese Zahl wird durch die Gesamtzahl der gemessenen Skalierungskoeffizienten dividiert. Die Abängigkeit der bei der Division erhaltenen Werte (P(a)) vom Wert (a) des Skalierungskoeffizienten stellt die kumulative Verteilungsfunktion dar. Analog wird die kumulative Verteilungsfunktion für eine Vergleichsmenge bestimmt. Die kumulative Verteilungsfunktion der Vergleichsmenge wird so normiert, daß sie mit der kumulativen Verteilungsfunktion der untersuchten Menge bei den größten vorkommenden Werten der Skalierungskoeffizienten übereinstimmt. Analog zu den Spektren ist die Abweichung der kumulativen Verteilungsfunktionen bei kleinen Werten der Skalierungskoeffizienten ein Maß für das Auftreten von Dichte- und Korrelationsgradienten.

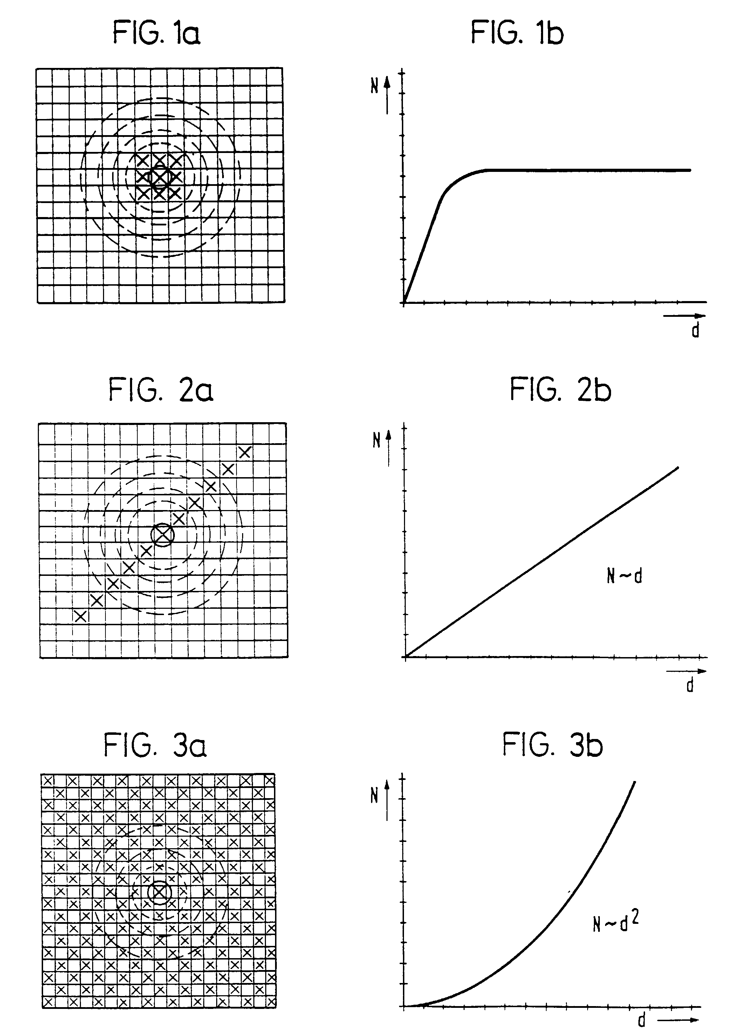

Bevor auf spezielle Ausführungsbeispiele eingegangen wird, soll das der Erfindung zugrundeliegende Prinzip unter Bezugnahme auf die Fig. 1 bis 3 erläutert werden. Die Fig. 1a, 2a und 3a stellen jeweils ein zweidimensionales Pixel-Raster dar. "Schwarze" Pixel, die "Punkte" auf einem weißen Hintergrund darstellen, sind durch ein Kreuz bezeichnet.

Fig. 1 zeigt eine fleckartige, in erster Näherung punktartige oder nulldimensionale Verteilung von schwarzen Pixeln im Zentrum des Rasters. Die Ermittlung des Skalierungskoeffizienten sei am Beispiel des mittleren schwarzen Pixels, das durch einen ausgezogenen Kreis bezeichnet ist, erläutert. Für dieses Pixel wird die "Dichte", genauer gesagt die Anzahl der Punkte in Abhängigkeit vom Durchmesser d des das Pixel umgebenden Bereichs (oder vom Abstand r von der Mitte des betreffenden Pixels aus gerechnet) bestimmt. Wie in Fig. 1b dargestellt ist, steigt die Anzahl der schwarzen Pixel im betrachteten Bereich, mit zunehmendem d zuerst an, bleibt dann aber konstant. Der Grad der Potenzfunktion, die den konstanten Hauptteil der Kurve in Fig. 1b darstellt, und damit der Skalierungskoeffizient (oder Skalierungsexponent) der Dichte-Abstand-Funktion ist dementsprechend null.

Fig. 2a zeigt eine lineare Verteilung von schwarzen Pixeln. Auch hier sei das durch einen ausgezogenen Kreis bezeichnete Pixel betrachtet und es wird die Anzahl der schwarzen Pixel in der Umgebung dieses Pixels als Funktion des Durchmessers bestimmt, wie durch gestrichelte Kreise angedeutet ist. Hier nimmt offensichtlich die Anzahl der Pixel linear mit dem Durchmesser d zu. Die Dichte-Durchmesser-Funktion ist eine Gerade und der Skalierungskoeffizient ist dementsprechend gleich eins.

Fig. 3a zeigt eine flächige Verteilung von schwarzen Pixeln. Hier nimmt die Anzahl der schwarzen Pixel proportional zum Quadrat des Durchmessers d zu. Der Skalierungskoeffizient ist dementsprechend zwei.

Für Verteilungen, die von den oben beschriebenen abweichen, ergeben sich andere, ggf. nicht-ganzzahlige Skalierungskoeffizienten.

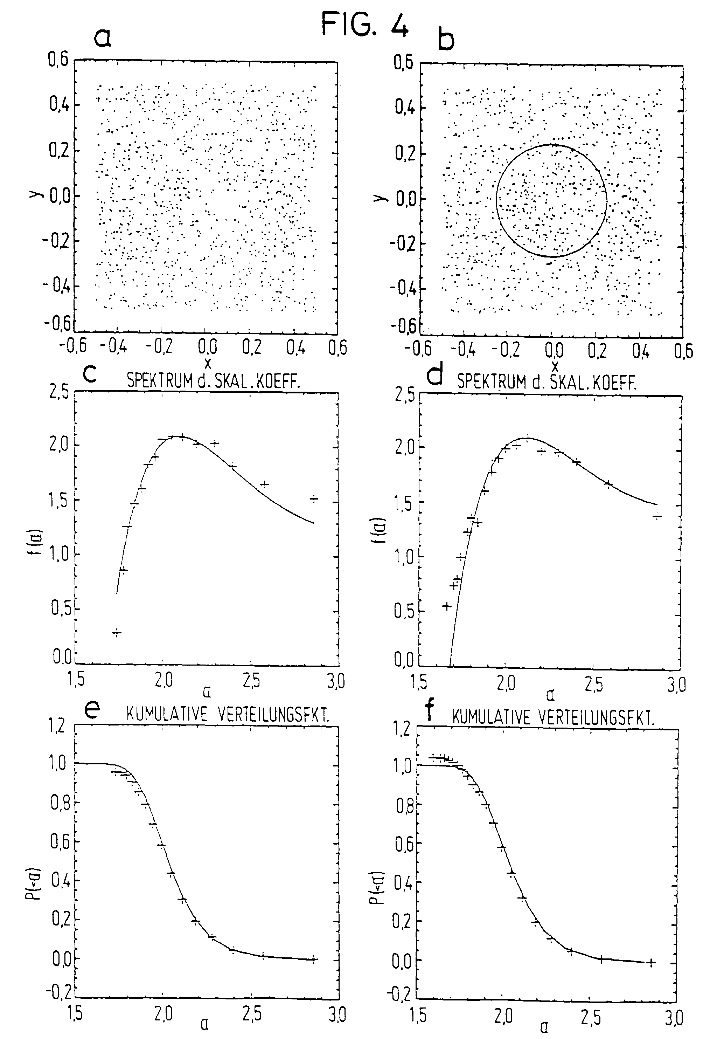

Fig. 4 zeigt die hohe Nachweisempfindlichkeit des vorliegenden Verfahrens am Beispiel einer Punktmenge in einem zweidimensionalen Koordinatenraum. In Fig. 4a ist eine stochastische Punktmenge mit 900 Punkten dargestellt. Fig. 4b zeigt die Punktmenge gemäß Fig. 4a, die in der Mitte zusätzlich 100 Punkte mit einer gaußförmigen Dichteverteilung ("Struktur") enthält. Der $1\delta$-Radius dieser Gaußverteilung beträgt 1/8 des Felddurchmessers. Die Struktur befindet sich innerhalb des eingezeichneten Kreises.

Fig. 4c und Fig. 4d zeigen das Spektrum der Skalierungskoeffizienten für die stochastische Punktmenge gemäß Fig. 4a bzw. für die die Struktur enthaltende Punktmenge gemäß Fig. 4b. In den Fig. 4e und 4f ist die kumulative Verteilungsfunktion für die Punktmenge gemäß Fig. 4a bzw. 4b dargestellt.

Bei der Prüfung, ob eine gegebene Punktmenge eine Struktur enthält, wird man im allgemeinen die kumulative oder integrale Verteilungsfunktion der zu untersuchenden Punktmenge an die theoretisch erwartete Kurve für eine entsprechende stochastische Punktmenge anpassen und aus dieser Anpassung die Anzahl der im untersuchten Feld stochastisch verteilten Punkte bestimmen. Weicht die so bestimmte Zahl stochastischer Punkte signifikant von der Zahl der im untersuchten Feld insgesamt vorhandenen Punkte ab, so enthält das untersuchte Feld eine Struktur, wie sie oben definiert wurde. Wendet man dieses Kriterium auf 100 statistisch unabhängige Felder an, die gemäß dem im vorhergehenden Abschnitt beschriebenen Verfahren erzeugt wurden, so werden bei einer Abweichung von mehr als $2\delta$ 95 Felder als nichtstochastisch identifiziert, wobei in 88 Fällen die Zahl der stoachastischen Punkte (900 Punkte) bis auf $1\delta$ (30 Punkte) genau bestimmt wird.

Die kumulative Verteilungsfunktion läßt also erkennen, ob die betrachtete Punkteverteilung eine Struktur enthält.

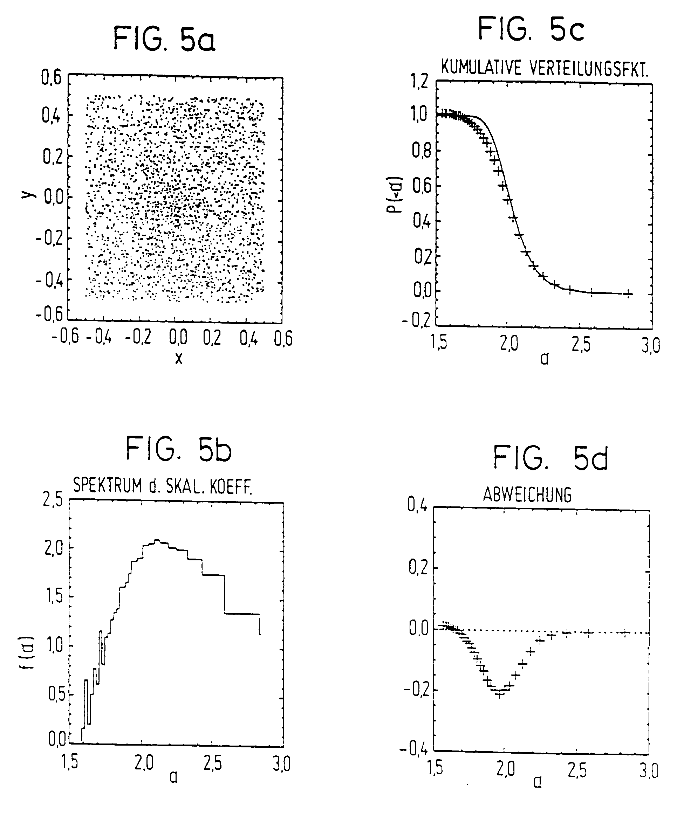

Als praktisches Beispiel zeigt Fig. 5a eine mit dem Röntgensatelliten ROSAT gemessene Photonenkarte des Clusters A1314. Jedem vom Detektor des Satelliten registrierten Photon sind zwei Ortskoordinatenwerte und ein Energiewert zugeordnet. In Fig. 5a entspricht jeder schwarze Punkt in dem zweidimensionalen Koordinatenraum einem gemessenen Photon, das durch seine Detektorkoordinaten identifiziert wird. Für diese Punktmenge wird das Spektrum der Skalierungskoeffizienten bestimmt, das in Fig. 5b dargestellt ist. Dieses Spektrum wird mit dem Spektrum einer Menge verglichen, deren Punkte stochastisch verteilt sind. Für eine solche zufällig ausgespielte, stochastische Punktverteilung läßt sich das Spektrum der Skalierungskoeffizienten analytisch bestimmen.

Fig. 5c zeigt die kumulative Verteilungsfunktion der Punktmenge gemäß Fig. 5a (Kreuze) und die kumulative Verteilungsfunktion der stochastischen Punktmenge (ausgezogene Kurve).

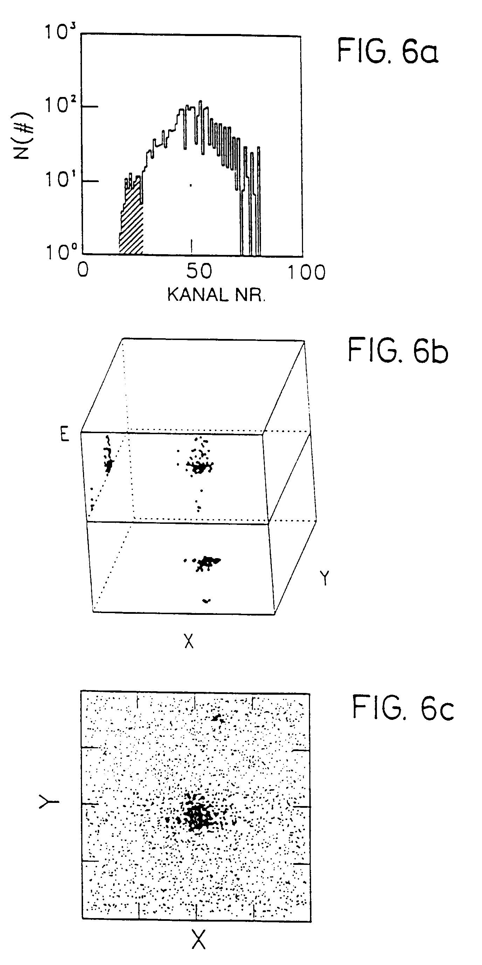

In Fig. 5d ist die Abweichung der kumulativen Verteilungsfunktion der Punktmenge gemäß Fig. 5a von der kumulativen Verteilungsfunktion der stochastischen Menge dargestellt. Die Abweichung wurde im vorliegenden Falle noch dadurch verstärkt, daß man die Energie als dritte Koordinate hinzunahm. Die Energie und die Ortskoordinaten wurden auf einen Einheitswürfel skaliert und von der so erhaltenen Punktmenge das Spektrum der Skalierungskoeffizienten bestimmt, das in Fig. 6a dargestellt ist. Der Teil des Skalierungskoeffizienten-Spektrums, der auf die die Abweichung verursachenden Punkte in Fig. 5a zurückgeht, ist in Fig. 6a schraffiert dargestellt. Stellt man diese Punkte in einem Einheitswürfel dar, so erhält man die in Fig. 6b dargestellte räumliche Punkteverteilung.

Fig. 6c zeigt die Projektion dieser Punktverteilung in die xy-Ebene in der auch die ursprüngliche Punkteverteilung gemäß Fig. 5a dargestellt ist. Die durch das vorliegende Verfahren identifizierte Struktur gemäß Fig. 6c gibt die Position und Konfiguration des Clusters A1314 sehr gut wieder.

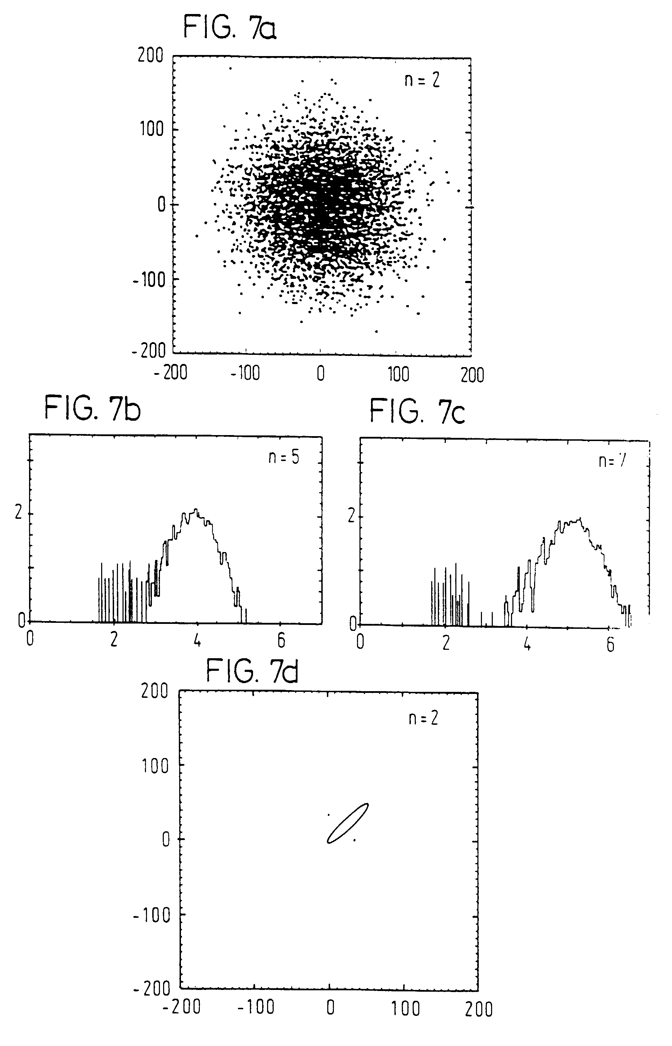

Als weiteres Beispiel zeigen die Fig. 7a bis 7d die Auswertung einer Punkteverteilung (Fig. 7a) entsprechend einem von Rauschen überlagertem unvollständigen Sinussignal. Aus einer simulierten Zeitreihe, die sich aus einer unvollständigen Sinuskomponente und einer vollständig stochastischen Komponente zusammensetzte, wurden n-dimensionale Koordinatenräume konstruiert (n=2,5,7). Jeder Punkt in Fig. 7a ist durch n aufeinanderfolgende Meßpunkte definiert, wobei die erste Koordinate der Punkte die gesamte Zeitreihe durchläuft. Als Vergleichsmenge wird eine Zeitreihe verwendet, die nur eine stochastische Komponente enthält. Wie die Fig. 7b und 7c für n=5 bzw. n=7 zeigen, wird die Trennung der stochastischen Komponente von der sinusartigen korrelierten Komponente mit zunehmender Dimension des Koordinatenraumes größer.

Fig. 7d zeigt die Rekonstruktion des Sinussignals aus einem Skalierungskoeffizienten-Spektrum für n=2.

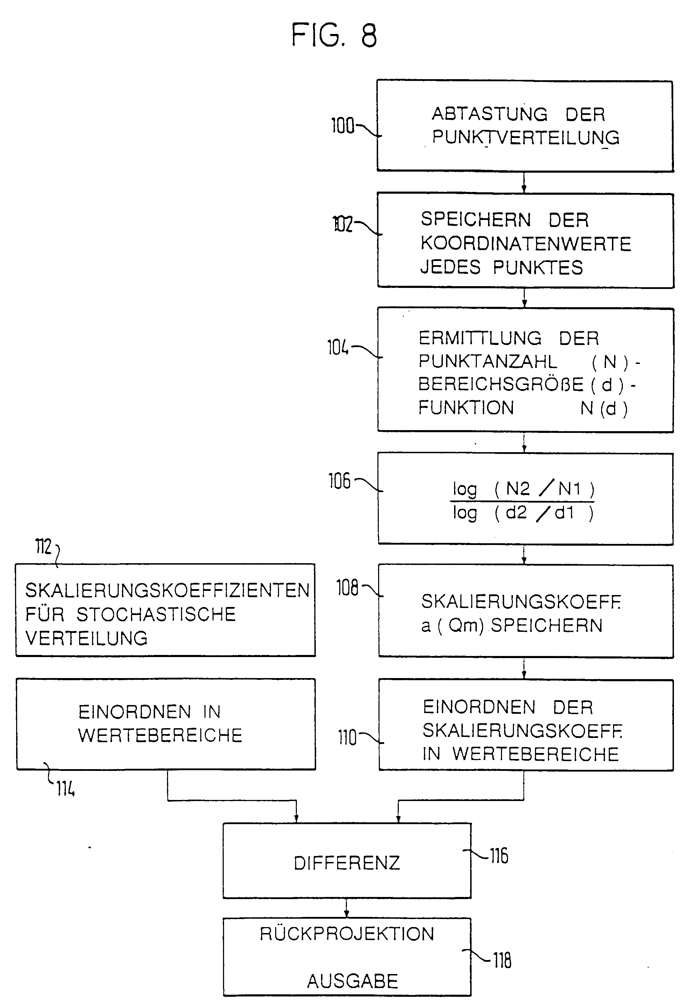

Fig. 8 zeigt ein Funktions-Blockschaltbild einer Einrichtung zur Durchführung des oben beschriebenen Raumfilterungsverfahrens auf der Basis der Skalierungskoeffizientenspektren. Die einzelnen Einheiten der Einrichtung sind dabei durch ihre Funktionen bezeichnet.

Die zu filternde Punkteverteilung wird als erstes in einer Abtasteinrichtung 100 zum Ermitteln der Koordinatenwerte der Punkte $Q_m$ der Punkteverteilung abgetastet.

Die ermittelten Koordinatenwerte $x_{Qm}$, $y_{Qm}$, ...werden in einer Speichereinheit 102 gespeichert.

An die Speichereinheit 102 ist eine Integriereinheit 104 angeschlossen, welche die in der Speichereinheit 102 gespeicherten Punktekoordinaten abfragt und die Punkteanzahl/Bereichsgröße-Funktion N(d) ermittelt.

Eine Logarithmiereinheit 106 ermittelt aus der Punkteanzahl/Bereichsgröße-Funktion des betreffenden Punktes $Q_m$ den Skalierungskoeffizienten $a(Q_m)$ des betreffenden Punktes $Q_m$ auf der Basis der folgenden Formel

$$\frac{\log\ (N2\ /\ N1)}{\log\ (d2\ /\ d1)}$$

wobei N1 und N2 die Anzahlen der Punkte in den Bereichen mit den Abmessungen dl bzw. d2 bedeuten. Man erhält dadurch den Skalierungskoeffizienten $a(Q_m)$ des betreffenden Punktes $Q_m$, der mit den Punktekoordinaten in einem Speicher 108 gespeichert wird. Man kann hierzu den Speicher 102 verwenden und den schon gespeicherten Koordinatenwerten des betreffenden Punktes den ermittelten Skalierungskoeffizienten zuordnen.

Als nächstes werden die Skalierungskoeffizienten aus dem Speicher 108 abgefragt und in einer Diskriminatoreinheit 110 in Wertebereiche eingeordnet.

Die Einrichtung gem. Fig. 8 enthält ferner einen Speicher 112, der dem Speicher 102 entspricht und die Koordinatenwerte einer mit der auszuwertenden Punkteverteilung vergleichbaren stochastischen Punkteverteilung enthält. In einer an diesen Speicher angeschlossenen Einheit 114 werden die Skalierungskoeffizienten für diese stochastische Verteilung ermittelt und in Wertebereiche entsprechend den Wertebereichen der Einheit 110 eingeordnet.

In einer Differenzstufe 116 werden die Skalierungskoeffizienten der stochastischen Verteilung von den Skalierungskoeffizienten der auszuwertenden Punkteverteilung abgezogen. Schließlich werden die Punkte, die den bei der Differenzbildung verbliebenen skalierungskoeffizienten entsprechen, in einer Ausgabeeinheit 118 "rückprojiziert", d.h. sie werden in einem n-dimensionalen Raum wie die abgetastete Punkteverteilung mittels eines Druckers und/oder eines Monitors dargestellt oder als gefilterte Werteverteilung in anderer Weise weiterverarbeitet.

Die Stufen 102 bis 116 können durch diskrete Baueinheiten oder durch einen Mikroprozessor realisiert werden.

## Patentansprüche

1. Automatisches Bildauswertungsverfahren mittels Raumfilterung einer Punkteverteilung, die eine von Störungen überlagerte Struktur darstellt und deren Punkte jeweils durch n Koordinatenwerte eines n-dimensionalen Raumes definiert sind, **gekennzeichnet durch** die Verfahrensschritte:

   a) für jeden Punkt ($Q_m$) wird die Funktion ermittelt, die die Abhängigkeit der Anzahl (N) der Punkte in einer Umgebung des betreffenden Punktes von einer Abmessung (d) der umgebung darstellt;
   b) für jeden Punkt wird ein Skalierungskoeffizient ($a(Q_m)$) ermittelt, der gleich dem Exponenten (a) einer einfachen Potenzfunktion

   $$N \sim d^a$$

   ist, welche die im Schritt a) ermittelte Funktion in einem gewissen Bereich der Abmessung (d) möglichst gut annähert,
   c) es werden die Skalierungskoeffizienten der Punkte einer n-dimensionalen stochastischen Punkteverteilung eines der zu filternden Punkteverteilung äquivalenten Typs ermittelt,
   d) es wird die Differenz zwischen den Skalierungskoeffizienten der zu filternden Punkteverteilung und den Skalierungskoeffizienten der stochastischen Punkteverteilung ermittelt,
   e) die Punkte der zu filternden Punkteverteilung, deren Skalierungskoeffizienten sich wesentlich von den Skalierungskoeffizienten der stochastischen Punkteverteilung unterscheiden, werden in einem mindestens zweidimensionalen Raum dargestellt.

2. Automatisches Bildauswertungsverfahren mittels Raumfilterung einer Punkteverteilung, die eine von Störungen überlagerte Struktur darstellt und deren Punkte jeweils durch n Koordinatenwerte eines n-dimensionalen Raumes definiert sind, **gekennzeichnet durch** die Verfahrensschritte:

a) für jeden Punkt ($Q_m$) wird die Funktion ermittelt, die die Abhängigkeit der Anzahl (N) der Punkte in einer Umgebung des betreffenden Punktes von einer Abmessung (d) der Umgebung darstellt;
b) für jeden Punkt wird ein Skalierungskoeffizient ($a(Q_m)$) ermittelt, der gleich dem Exponenten (a) einer einfachen Potenzfunktion

$$N \sim d^a$$

ist, welche die im Schritt a) ermittelte Funktion in einem gewissen Bereich der Abmessung (d) möglichst gut annähert,
c) es werden die Skalierungskoeffizienten der Punkte einer n-dimensionalen stochastischen Punkteverteilung eines der zu filternden Punkteverteilung äquivalenten Typs ermittelt,
d) jedem vorkommenden Wert der Skalierungskoeffizienten der zu filternden und der stochastischen Punkteverteilung wird eine Kumulativzahl ($P(a)$) zugeordnet, die gleich der Anzahl der ermittelten Skalierungskoeffizienten der betreffenden Verteilung ist, die größer oder gleich dem betreffenden Skalierungskoeffizienten sind, dividiert durch die Gesamtzahl der gemessenen Skalierungskoeffizienten der betreffenden Verteilung, wobei die in diesem Schritt ermittelten Kumulativzahlen der stochastischen Verteilung so normiert werden, daß sie bei den größten Zahlenwerten mit den größten Zahlenwerten für die zu filternde Verteilung übereinstimmen,
e) die Wertebereiche der Skalierungskoeffizienten der zu filternden und der stochastischen Punkteverteilung werden in Teilbereiche aufgeteilt;
f) für jeden Teilbereich wird die Differenz der zugehörigen, im Schritt d) ermittelten Kumulativzahlen der zu filternden Punkteverteilung und der stochastischen Punkteverteilung erzeugt, und
g) die Punkte der zu filternden Punkteverteilung, deren Skalierungskoeffizienten sich wesentlich von den Skalierungskoeffizienten der stochastischen Punkteverteilung unterscheiden, werden in einem mindestens zweidimensionalen Raum dargestellt.

3. Verfahren nach Anspruch 1 oder 2, **dadurch gekennzeichnet**, daß der Schritt a) folgende Teilschritte umfaßt:

a1) die Punkteverteilung wird abgetastet und die dabei ermittelten Koordinatenwerte der einzelnen Punkte ($Q_m$) werden gespeichert;
a2) für jeden Punkt werden Koordinatenwerte, die den Koordinaten des Punktes benachbart sind, in sukzessive größeren Abständen durch Durchsuchen des Speichers abgefragt, ob diese Koordinaten einen Punkt enthalten und die Anzahl der dabei ermittelten Punkte wird als Funktion des Abstandes gespeichert.

4. Verfahren nach einem der Ansprüche 1 bis 3, **dadurch gekennzeichnet**, daß der Verfahrensschritt b) die folgenden Teilschritte enthält:

b1) es wird die Funktion log N ~ a log d ermittelt, wobei N die Anzahl der Punkte und d eine Dimension des den betrachteten Punkt umgebenden Bereiches darstellt, und
b2) es wird die Steigung eines im wesentlichen geraden Teiles dieser Funktion ermittelt und als Skalierungskoeffizient verwendet.

5. Einrichtung zur automatischen Bildauswertung mittels Raumfilterung einer Punkteverteilung, die eine von Störungen überlagerte Struktur darstellt und deren Punkte jeweils durch N Koordinatenwerte eines n-dimensionalen Raumes definiert sind, **gekennzeichnet durch**

a) eine Einrichtung (100) zum Ermitteln der Koordinatenwerte jedes Punktes;
b) einen Speicher (102) zum Speichern der Koordinatenwerte jedes Punktes;
c) eine Recheneinrichtung (104, 106, 108) die für jeden Punkt einen Skalierungskoeffizienten ermittelt, der gleich dem Exponenten (a) einer einfachen Potenzfunktion

$$N \sim d^a$$

ist, welche die Abhängigkeit der Anzahl (N) der Punkte in einer Umgebung des betreffenden Punktes von einer Abmessung (d) der Umgebung darstellt;
d) einer Vorrichtung (112) zum Bereitstellen von Skalierungskoeffizienten der Punkte einer n-dimensionalen stochastischen Punkteverteilung eines der zu filternden Punkteverteilung äquivalenten Typs;
e) eine Vorrichtung (116) zum Selektieren der Punkte der zu filternden Punkteverteilung, die in einem Bereich der Skalierungskoeffizienten liegen, in denen sich die Skalierungskoeffizienten der zu filternden Punkteverteilung wesentlich von den Skalierungskoeffizienten der stochastischen Punkteverteilung unterscheiden, und
f) eine Vorrichtung zur Darstellung der Punkte, denen die selektierten Skalierungskoeffizienten zugeordnet sind.

## Claims

1. An automatic method of image evaluation by spatial filtering a point distribution representing a structure interferred by noise wherein each of the points being defined by n coordinate values of an n-dimensional space, characterized by the method steps:

   a) for each point ($Q_m$) the function is established which represents the number (N) of the points in the surrounding of the point concerned as a function of a dimension (d) of the surrounding,
   b) for each point a scaling coefficient ($a(Q_m)$) equal to the exponent (a) of a simple power function

$$N \sim d^a$$

   is established which approximates as near as possible the function established in step a) in a certain region of the dimension (d),
   c) the scaling coefficients of the points of a n-dimensional stochastic point distribution of a type equivalent to the point distribution to be filtered are established,
   d) the difference between the scaling coefficients of the point distribution to be filtered and the scaling coefficients of the stochastic point distribution is established,
   e) the points of the point distribution to be filtered, the scaling coefficients of which differing substantially from the scaling coefficients of the stochastic point distribution are represented in an at least two-dimensional space.

2. An automatic method of image evaluation by spatial filtering a point distribution representing a structure interferred by noise wherein each of the points being defined by n coordinate values of an n-dimensional space, characterized by the method steps:

   a) for each point ($Q_m$) the function is established which represents the number (N) of the points in the surrounding of the point concerned as a function of a dimension (d) of the surrounding,
   b) for each point a scaling coefficient ($a(Q_m)$) equal to the exponent (a) of a simple power function

$$N \sim d^a$$

   is established which approximates as near as possible the function established in step a) in a certain region of the dimension (d),
   c) the scaling coefficients of the points of a n-dimensional stochastic point distribution of a type equivalent to the point distribution to be filtered are established,
   d) to each existing value of the scaling coefficients of the point distribution to be filtered and of the stochastic point distribution is assigned a cumulative number ($P(a)$) equal to the estimated number of scaling coefficients of the distribution concerned which are greater than or equal to the corresponding scaling coefficient, divided by the total number of the measured scaling coefficients of the distribution concerned, wherein the cumulative numbers of the stochastic distribution established in this step being scaled such that they agree by their highest numerical values with the highest numerical values for the distribution to be filtered,
   e) the ranges of values of the scaling coefficients of the point distribution to be filtered and of the stochastic point distribution are divided into sub-ranges;
   f) for each sub-range the difference between the associated cumulative numbers established in step d) of the point distribution to be filtered and of the stochastic point distribution is generated; and
   g) the points of the point distribution to be filtered, the scaling coefficients of which differing substantially from the scaling coefficients of the stochastic point distribution are represented in an at least two-dimensional space.

3. The method as set forth in claim 1 or 2, characterized in that said step a) comprises the following sub-steps:

   a1) the point distribution is sampled and the coordinate values of the individual points ($Q_m$) established thereby are stored;
   a2) for each point coordinate values neighbouring the coordinates of the point are polled in successively greater distances by searching through the memory, as to whether these coordinates contain a point, and the number of points established thereby is stored as the function of the distance.

4. The method as set forth in any of the claims 1 to 3, characterized in that said method step b) includes the following sub-steps:

   b1) the function $\log N \sim a \log d$ is established, N being the number of points and d a dimension of the surrounding of the point being considered; and
   b2) the slope of a substantially straight portion of this function is established and used as a spatial coefficient.

5. A device for automatic image evaluation by spatial filtering a point distribution representing a structure interferred by noise wherein each of the points being defined by N coordinate values of an n-dimensional space, characterized by:

a) a means (100) for establishing the coordinate values of each point;

b) a memory (102) for storing the coordinate values of each point;

c) a calculating means (104, 106, 108) establishing for each point a scaling coefficient equal to the exponent (a) of a simple power function

$$N \sim d^a$$

representing the number (N) of points in the surrounding of the point concerned as a function of a dimension (d) of the surrounding;

d) a device (112) for providing scaling coefficients of the points of a n-dimensional stochastic point distribution of a type equivalent to the point distribution to be filtered;

e) a device (116) for selecting the points of the point distribution to be filtered, which lie in a range of the scaling coefficients, in which the scaling coefficients of the point distribution to be filtered substantially differ from the scaling coefficients of the stochastic point distribution; and

f) a device for representing the points to which the selected scaling coefficients are assigned.

**Revendications**

1. Procédé automatique d'analyse d'images au moyen d'une filtration dans l'espace d'une répartition de points qui représentent une structure interférée par des parasites et dont les points sont définis respectivement par n valeurs de coordonnées d'un espace à n dimensions, caractérisé par les étapes de procédé ci-dessous :

a) pour chaque point ($Q_m$), on calcule la fonction qui représente la dépendance entre le nombre (N) des points dans un environnement du point concerné et une dimension (d) de l'environnement ;

b) pour chaque point, on calcule un coefficient de graduation ($a(Q_m)$) qui est égal à l'exposant (a) d'une fonction de puissance simple $N \sim d^a$, qui se rapproche le mieux possible de la fonction déterminée dans l'étape a) dans une certaine plage de la dimension (d),

c) on détermine les coefficients de graduation des points d'une répartition de points stochastique à n dimensions d'un type équivalent à la répartition de points à filtrer,

d) on détermine la différence entre les coefficients de graduation de la répartition de points à filtrer et les coefficients de graduation de la répartition de points stochastique,

e) les points de la répartition de points à filtrer dont les coefficients de graduation sont sensiblement différents des coefficients de graduation de la répartition de points stochastique, sont représentés dans un espace au moins bidimensionnel.

2. Procédé automatique d'analyse d'image par filtration dans l'espace d'une répartition de points qui représente une structure interféré par des parasites et dont les points sont définis respectivement par n valeurs de coordonnées dans l'espace à n dimensions, caractérisé par les étapes suivantes :

a) pour chaque point ($Q_m$), on calcule la fonction qui représente la dépendance entre le nombre (N) des points dans un environnement du point concerné et une dimension (d) de l'environnement ;

b) pour chaque point, on détermine un coefficient de graduation ($a(Q_m)$) qui est égal à l'exposant (a) d'une fonction de puissance simple $N \sim d^a$, laquelle se rapproche le mieux possible de la fonction déterminée dans l'étape a) dans une certaine plage de la dimension (d),

c) on calcule les coefficients de graduation des points d'une répartition de points stochastique à n dimensions d'un type équivalent à la répartition de points à filtrer,

d) à chaque valeur apparaissant des coefficients de graduation de la répartition de points à filtrer et de la répartition de points stochastiques, on attribue un nombre cumulatif ($P(a)$) qui est égal au nombre des coefficients de graduation calculés de la répartition concernée qui sont supérieurs ou égaux au coefficient de graduation concerné, divisé par le nombre total des coefficients de graduation mesurés de la répartition concernée, les nombres cumulatifs calculés dans cette étape de la répartition stochastique étant normalisés de telle façon qu'ils coïncident pour les valeurs numériques maximales avec les valeurs numériques maximales pour la répartition à filtrer,

e) les plages de valeur des coefficients de graduation de la répartition de points à filtrer et de la répartition de points stochastique sont subdivisés en plages partielles,

f) pour chaque plage partielle, on réalise la différence entre les nombres cumulatifs spécifiques, calculés à l'étape d), de la répartition de points à filtrer et de la répartition de points stochastique.

3. Procédé selon la revendication 1 ou 2, caractérisé en ce que l'étape a) comprend les étapes partielles suivantes :

a1) la répartition des points est balayée et les valeurs de coordonnées ainsi calculées des différents points ($Q_m$) sont mémorisées,

a2) pour chaque point, on interroge des valeurs de coordonnées qui sont voisine des coordonnées du point, à des intervalles successifs assez importants, par balayage de la mémoire, pour voir si ces coordonnées contiennent un point et le nombre des points ainsi calculés est mémorisé en fonction de l'intervalle.

4. Procédé selon l'une quelconque des revendications 1 à 3, caractérisé en ce que l'étape de procédé b) contient les étapes partielles suivantes :

b1) on détermine la fonction log N ~ a log d, N représentant le nombre des points et d une dimension de la plage entourant le point considéré, et

b2) on détermine la pente d'une partie sensiblement droite de cette fonction et on l'utilise comme coefficient de graduation.

5. Appareil pour l'analyse automatique d'image au moyen d'une filtration dans l'espace d'une répartition de points qui représente une structure interféré par des parasites et dont les points sont définis respectivement par N valeurs de coordonnées d'un espace à n dimensions, caractérisé par

a) un appareil (100) pour la détermination des valeurs de coordonnées de chaque point ;

b) une mémoire (102) pour la mémorisation des valeurs de coordonnées de chaque point ;

c) un appareil de calcul (104, 106, 108) qui détermine pour chaque point un coefficient de graduation qui est égal à l'exposant (a) d'une fonction de puissance simple N ~ $d^a$, laquelle représente la dépendance entre le nombre (N) des points dans un environnement du point concerné et une dimension (d) de l'environnement ;

d) un dispositif (112) pour la mise à disposition de coefficients de graduation des points d'une répartition de points stochastique à n dimensions d'un type équivalent à la répartition de points à filtrer ;

e) un dispositif (116) pour la sélection des points de la répartition de points à filtrer qui se situe dans une plage des coefficients de graduation dans laquelle les coefficients de graduation de la répartition de points à filtrer sont sensiblement différents des coefficients de graduation de la répartition de points stochastique et

f) un dispositif pour la représentation des points auxquels sont attribués les coefficients de graduation sélectionnés.

# FIG. 1a

# FIG. 1b

# FIG. 2a

# FIG. 2b

$N \sim d$

# FIG. 3a

# FIG. 3b

$N \sim d^2$

# FIG. 4

## FIG. 5a

## FIG. 5c

KUMULATIVE VERTEILUNGSFKT.

## FIG. 5b

SPEKTRUM d. SKAL. KOEFF.

## FIG. 5d

ABWEICHUNG

FIG. 6a

FIG. 6b

FIG. 6c

## FIG. 7a

## FIG. 7b

## FIG. 7c

## FIG. 7d

# FIG. 8

100 — ┌─────────────────────────┐
│ ABTASTUNG DER │
│ PUNKTVERTEILUNG │
└─────────────────────────┘

102 — ┌─────────────────────────┐
│ SPEICHERN DER │
│ KOORDINATENWERTE │
│ JEDES PUNKTES │
└─────────────────────────┘

104 — ┌─────────────────────────┐
│ ERMITTLUNG DER │
│ PUNKTANZAHL ( N ) - │
│ BEREICHSGRÖßE ( d ) - │
│ FUNKTION N ( d ) │
└─────────────────────────┘

106 — ┌─────────────────────────┐
│ $\dfrac{\log\ (\,N2\,/\,N1\,)}{\log\ (\,d2\,/\,d1\,)}$ │
└─────────────────────────┘

112 — ┌─────────────────────────┐     108 — ┌─────────────────────────┐
│ SKALIERUNGSKOEFFIZIENTEN │            │ SKALIERUNGSKOEFF. │
│ FÜR STOCHASTISCHE │                   │ a ( Qm ) SPEICHERN │
│ VERTEILUNG │                          └─────────────────────────┘
└─────────────────────────┘

┌─────────────────────────┐     110 — ┌─────────────────────────┐
│ EINORDNEN IN │                        │ EINORDNEN DER │
│ WERTEBEREICHE │                       │ SKALIERUNGSKOEFF. │
└─────────────────────────┘            │ IN WERTEBEREICHE │
114                                     └─────────────────────────┘

┌─────────────────────────┐
│ DIFFERENZ │ — 116
└─────────────────────────┘

┌─────────────────────────┐
│ RÜCKPROJEKTION │
│ │ — 118
│ AUSGABE │
└─────────────────────────┘